# EUROPEAN PATENT SPECIFICATION

(11) **EP 3 311 519 B1**
(45) Date of publication and mention of the grant of the patent: **09.10.2019**
(21) Application number: 15750731.0
(22) Date of filing: 13.08.2015
(51) Int. Cl.: H04L 5/00, H04J 11/00, H04W 72/08

(54) **INTERFERENCE DETECTOR FOR A WIRELESS COMMUNICATION SYSTEM**
INTERFERENZDETEKTOR FÜR DRAHTLOSES KOMMUNIKATIONSSYSTEM
DÉTECTEUR D'INTERFÉRENCE POUR SYSTÈME DE COMMUNICATION SANS FIL

(43) Date of publication of application: 25.04.2018
(73) Proprietor: Huawei Technologies Co., Ltd., Longgang District Shenzhen, Guangdong 518129 (CN)
(72) Inventor: WANG, Fan, S-16440 Kista (SE); POPOVIC, Branislav, S-16440 Kista (SE); BERGGREN, Fredrik, S-16440 Kista (SE)
(74) Representative: Kreuz, Georg Maria
(86) International application number: PCT/EP2015/068672
(87) International publication number: WO 2017/025146

(56) References cited:
- US-A1- 2013 012 134
- ALCATEL-LUCENT SHANGHAI BELL ET AL: "LBT and Frame Structure Design for DL-Only LAA", 3GPP DRAFT; R1-153385-LBT-DL - FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Fukuoka, Japan; 20150525 - 20150529 19 May 2015 (2015-05-19), XP050976635, Retrieved from the Internet: URL:http://www.3gpp.org/ftp/tsg_ran/WG1_RL 1/TSGR1_81/Docs/ [retrieved on 2015-05-19]
- HUAWEI ET AL: "LBT design for LAA-LAA coexistence and support of reuse 1", 3GPP DRAFT; R1-153229, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Fukuoka, Japan; 20150525 - 20150529 16 May 2015 (2015-05-16), XP050971005, Retrieved from the Internet: URL:http://www.3gpp.org/ftp/tsg_ran/WG1_RL 1/TSGR1_81/Docs/ [retrieved on 2015-05-16]

## Description

### TECHNICAL FIELD

The present invention relates to an interference detector for a wireless communication system, a licensed assisted access transmission device, and a communication system comprising a plurality of transmission devices. The present invention also relates to a method for determining an interference type in a wireless communication system, to a method for transmitting a signal in a wireless communication system and to a computer-readable storage medium.

### BACKGROUND

The 3rd Generation Partnership Project (3GPP) started a release 13 Long Term Evolution (LTE) study item, Licensed Assisted Access (LAA) with at least one licensed carrier as the primary cell (PCell) and at least one unlicensed carrier as the secondary cell (SCell), aiming to use the unlicensed spectrum, on which WiFi is currently deployed. It is observed that LTE significantly impacts WiFi performance in LTE-WiFi coexistence case, if current LTE functionalities are assumed. One major reason is that WiFi follows Listen-Before-Talk (LBT) principle, which specifies that a transmitting node can only start transmitting after it has performed Clear Channel Assessment (CCA) and measured that the channel is idle, while a legacy LTE Node does not perform CCA and may transmit continuously. The main problem for LTE Release 13 LAA is how to achieve fair and effective coexistence with Wi-Fi, and among LAA networks. To ensure fair and effective co-existence with WiFi, LTE needs to be modified to also support LBT on the unlicensed band.

There are basically two types of LBT mechanisms, FBE (Frame Based Equipment) and LBE (Load Based Equipment), where for FBE only one CCA phase is needed and the CCA is performed in pre-defined fixed timeline resulting in fixed starting time for downlink transmission, while for LBE both CCA phase and extended CCA phase are needed and the CCA may happen at flexible time resulting in flexible starting time for downlink transmission. When performing CCA, the channel shall be considered occupied if the energy level in the channel exceeds a threshold in a CCA slot.

A current WiFi system uses LBE based LBT with some modifications to better suit WiFi channels and signals, e.g. a CCA slot in the extended phase is 9us, an introduction of a defer period in eCCA measurement resulting in a channel sensing time no less than 34us for optimizing transmission of several channels/signals.

Thanks to some advanced techniques supported, e.g. inter-cell inter interference coordination, LTE system might be advantageous in terms of interference management, and therefore capable of frequency reuse, i.e. more than one transmit device or cell transmit with the same frequency at the same time. The general principle of WiFi systems of using the channel is no frequency reuse, as a WiFi device does not transmit if it senses the channel occupied. However, it would be beneficial to support frequency reuse among LAA eNB, while still able to fair co-exist with WiFi.

Examples of frequency reuse for LAA are given in "LBT and Frame Structure Design for DL-Only LAA", R1-153385, XP50976635 and "LBT design for LAA-LAA coexistence and support of reuse 1", R1-153229, XP50971005.

An important issue is how an LAA eNB performing clear channel assessment determines whether the detected energy is coming from some other LAA eNB or from a WiFi Node.

In one prior art, the LAA eNB measures the interference type based on long term statistics, e.g. RSRP measurement. The LAA eNB when performing CCA, based on the long term statistics of the interference, such as RSRP measurements, identifies the interference is LTE dominant or non-LTE dominant.

In another prior art, the LAA eNB performs detection of WiFi preamble, where a WiFi preamble with the duration on the order of 8us is transmitted in the beginning of a transmission burst containing data, according to 802.11 standards. If a WiFi preamble is detected, the LAA eNB considers this is non-LTE dominant. Otherwise, the LAA eNB considers this is LTE dominant.

In another prior art, the LAA eNB having the channel transmits a WiFi-like preamble in the beginning of a transmission burst containing data. The LAA eNB performing CCA detects the WiFi-like preamble to identify the interference type. If a WiFi-like preamble with the typical duration less than 20us is detected, the LAA eNB considers this is LTE dominant. Otherwise, the LAA eNB considers this is non-LTE dominant.

### SUMMARY OF THE INVENTION

The objective of the present invention is to provide an interference detector and a transmission device, wherein the interference detector and the transmission device overcome one or more problems of the prior art.

The invention is defined by the appended claims.

The inventors realized that some known solutions have the following disadvantages:
- Mismatch between the long term statistics and the practical interference type in case long term statistics are used to identify the interference type.
- Mismatch of the time the preamble is transmitted and the time CCA measurement is done in case WiFi or WiFi-like preamble detection used to identify the interference type. As WiFi or WiFi-like preamble is only sent once in the beginning of the each downlink burst, the detection of the interference type at the preamble phase would not be accurate enough to represent the channel condition outside of the preamble phase. In addition, if a transmit device misses the detection of the preamble, or performs CCA outside of the preamble phase, it would be not possible for the transmit device recognizes the interference type.
- Increased complexity in terms of transmitting WiFi-like preamble and/or detecting WiFi or WiFi-like preamble in case WiFi or WiFi-like preamble detection used to identify the interference type. For WiFi preamble detection method, the LAA eNB needs to detect the WiFi preamble. For WiFi-like preamble detection method, the LAA eNB needs to support both the transmission of WiFi-like preamble, and the detection of WiFi-like preamble.

A first aspect of the invention provides an interference detector for a wireless communication system, configured to
- receive a signal of the wireless communication system; and
- derive an interference type from an interference label in a partial frequency resource of the received signal.

The interference detector of the first aspect is configured to derive the interference type from a partial frequency resource of the received signal. In particular, the interference detector is configured to derive the interference type only from the partial frequency resource of the received signal.

Additionally the interference label comprises a predetermined sequence of modulation symbols.

This can be achieved e.g. by performing a Fast Fourier Transformation on the received signal and analyzing only a certain frequency region of the Fourier-transformed signal. This has the advantage that an interference label can be detected in this partial frequency resource, in contrast to e.g. analyzing the received signal in the time-domain, which means that a total frequency resource is analyzed. In general, the detection in the partial frequency resource does not have specific requirement of the time resource used. The measurement time could be one CCA slot time, or one OFDM symbol (with or without cyclic prefix), or any other time unit.

The interference label can be a label that has been intentionally inserted into an original signal of the wireless communication system. In other words, the interference label can be a label that indicates to receiving devices the origin of the labelled signal.

In other embodiments, the interference signal can also be a special property of the original signal, wherein the special property is only present in a partial frequency resource of the original signal.

In a first implementation of the interference detector according to the first aspect, the interference label comprises a zero-power resource element. In other words, a partial frequency resource from the signal can be blanked-out in the sense that no signal is transmitted in this frequency resource. This represents a particularly easy to implement way to label the signal, while at the same time this label can be detected with high accuracy. The interference label does not have a specific requirement of the time resource used, which means the interference label uses a frequency resource of a zero-power resource element, while the time resource could be one CCA slot time, or one OFDM symbol (with or without cyclic prefix), or any other time unit.

In other words, the interference detector can be configured to detect the predetermined sequence of modulation symbols in the partial frequency resource. The predetermined sequence of modulation symbols can be hard-coded or it can be a sequence that is communicated in advance to the interference detector.

In another implementation of the interference detector according to the first aspect, the partial frequency resource comprises one or more resource elements.

Thus, the partial frequency resource can correspond to a plurality of resource elements of the wireless communication system.

In another implementation of the interference detector according to the first aspect, the interference detector is configured to measure a total power of the received signal and derive the interference type if the measured total power is above a predetermined threshold.

In particular, the interference detector can be configured to measure a total power of the received signal and derive the interference type only if the measured total power is above a predetermined threshold. If the measured total power is below the predetermined threshold, it can be assumed that the channel is idle. Thus, there is no requirement to attempt determining an interference type.

In another implementation of the interference detector according to the first aspect, the interference detector is configured to measure a partial power of the received signal in the partial frequency resource.

This can be useful for example in order to detect a zero-power resource element to further derive whether there is a signal transmitted in the resource element. Even if a transmission device has not transmitted any power in the partial frequency resource, because of noise the interference detector would typically still detect a non-zero partial power in the partial frequency resource.

In another implementation of the interference detector according to the first aspect, the interference detector is further configured to compare the partial power of the received signal in the partial frequency resource with a second threshold.

Therefore, the partial power of the received signal can be compared to the predetermined threshold and if the partial power is lower than the predetermined threshold, it can be assumed that an interference label comprising a zero-power resource element has been inserted into the signal. Thus, the interference type of the signal can be determined.

In another implementation of the interference detector according to the first aspect, the interference detector is further configured to measure a different power of the received signal in a different frequency resource.

This can be useful e.g. to compare the partial power in the partial frequency resource with a different power in a different frequency resource, e.g. a different partial frequency resource. For example, if the normalized partial power (e.g. over the bandwidth of the frequency resource) in the partial frequency resource is significantly lower than the normalized power in a different partial frequency resource, it can be assumed that the partial frequency resource has been labelled e.g. with a zero-power resource element. Normalizing to the bandwidth may also cover the case that different numbers of resource elements used for zero-power resource elements and non-zero-power resource elements.

For example, if the interference detector is implemented in a LAA eNB, the last implementation can be useful for the LAA eNB to distinguish LAA interference from narrow band interference. For example, an LAA transmitting eNB transmits with zero power resource elements (ZPRE) and non-zero power resource elements in a number of consecutive resource elements, say in total N resource elements, where a narrow band interference is also allowed to transmit in the frequency resource which comprises the N resource elements. The LAA eNB is therefore able to determine that the interference is LAA if the received power from the zero-power resource elements is significantly lower than that from the non-zero power resource elements.

A second aspect of the invention refers to a licensed assisted access, LAA, transmission device, configured to transmit a signal, wherein a partial frequency resource of the signal comprises an interference label.

By labelling the transmitted signal with a particular interference label, other devices such as the interference detector of the first aspect can detect the interference label and infer that the signal originates from the LAA transmission device. In other words, because of the interference label other devices can detect the type of interference. By inserting the interference label only in a partial frequency resource, it is ensured that transmission in the wireless communication system is only minimally impacted, while still making it possible that an interference detector can detect the correct interference type.

Additionally the interference label comprises a predetermined sequence of modulation symbols.

In a first implementation of the transmission device according to the second aspect, the LAA transmission device is further configured to transmit at least one OFDM symbol using a plurality of resource elements, wherein a subset of the plurality of resource elements comprises the interference label.

In a second implementation of the transmission device according to the second aspect, the interference label comprises a zero-power resource element.

In a third implementation of the transmission device according to the second aspect, the transmitter is configured to continuously transmit the interference label.

In embodiments, there is transmitted a sequence of PDSCH symbols that (each) comprise an interference label. That is, the interference label is transmitted in a plurality of OFDM symbols in a downlink burst.

In a fourth implementation of the transmission device according to the second aspect, the subset comprises a first set of resource elements of a first OFDM symbol and a second set of resource elements of a second OFDM symbol, wherein the first and second set comprise elements with different frequency locations.

In a fifth implementation of the transmission device according to the second aspect, the subset comprises a set of resource elements not around a DC subcarrier and/or not at an edge of a transmission band of the LAA transmission device.

Resource elements not around a DC subcarrier means that the frequency of the resource elements is not within the frequency range [*f*₀ - Δ*f*₁/2, *f*₀ + Δ*f*₁/2], where *f*₀ is the frequency of the DC subcarrier, or the carrier frequency and Δ*f*₁ is the subcarrier spacing of WiFi system. For example, Δ*f*₁ equals 312.5 kHz for a WiFi system with system bandwidth of 20 MHz. Resource elements not located around at an edge of a transmission band of the LAA transmission device means that the frequency of the resource elements is not within [*f*₀ *- X* / 2*,* f₀ *- X* / 2 + Δ*f*]U[*f*₀ + X / 2 - Δ*f*, *f*₀ + *X* / 2] or a subset of [*f*₀ *- X* / 2, *f*₀ - *X* / 2 + Δ*f*]U*[f*₀ + X / 2 - Δ*f, f*₀ + *X* / 2], where Δ*f* is chosen so that *X* / *2 -*Δ*f* >= Δ*f*₁ ^{∗} (*N*₁ + 1) / 2, where *N*₁ is the number of used subcarriers in WiFi system, e.g. 56 in 802.11ac, X can be the system bandwidth of WiFi or LAA, or the transmission bandwidth of LAA, or the transmission bandwidth of LAA plus the LAA subcarrier spacing Δ*f*₂.

If the transmitter is configured to transmit zero-power resource elements, then it shall avoid the DC area and band edge. This is because the subcarrier spacing of WiFi is significantly wider than LTE, which results in a low power spectral density around the LAA DC subcarrier and the transmission bandwidth of WiFi is smaller than LTE, which results in a low power spectral density around the LAA band edge. Putting the zero power resource elements in the low power spectral density area of WiFi is therefore inefficient.

A third aspect of the present invention relates to a communication system comprising a plurality of LAA transmission devices according to the second aspect or one of its implementations, wherein the LAA transmission devices use at least one same resource element for interference label.

In a preferred embodiment, all cells of one operator use the same resource element to convey the interference label. This results in an empty power frequency range that an interference detector is able to identify.

In a first implementation of the communication system of the third aspect, the at least one same resource element is predetermined or indicated by a LAA node.

The LAA node can be configured to indicate the same resource element to the plurality of LAA transmission devices, for example via a message that is transmitted through a wireless or a wired connection.

This has the advantage that e.g. a central LAA node can ensure that a plurality of LAA nodes in a certain region use the same resource element, and an LAA interference type can be detected more easily by an interference detector that is receiving signals from the plurality of LAA nodes.

A fourth aspect of the present invention refers to a method for determining an interference type in a wireless communication system, comprising a step of deriving an interference type from a partial frequency resource of a received signal, wherein the partial frequency resource has a bandwidth smaller than a transmission bandwidth of the wireless communication system.

Furthermore said partial frequency resource of the signal comprises an interference label.

The CCA process can be adjusted once it has been determined that the interference type is an LTE interference type.

After deriving the interference type, this information can be used in a number of different ways, for example:
- If the LAA eNB doing CCA measurement detects the channel is busy, while it further detects the energy is from LAA, it interprets the channel as idle and therefore gets the opportunity to transmit, which may boost the overall capacity.
- If the LAA eNB doing CCA measurement detects the channel is busy, while it further detects the energy is not from LAA (e.g. WiFi), it will not transmit as it is not expected to create interference to WiFi.

A sixth aspect of the present invention refers to a computer-readable storage medium storing program code, the program code comprising instructions for carrying out the method of the fourth aspect.

The methods according to the fourth aspect of the invention can be performed by the interference detector according to the first aspect of the invention and the transmission device of the second aspect of the invention. Further features or implementations of the method according to the fourth aspect of the invention can perform the functionality of the devices according to the first and second aspect of the invention and their different implementation forms.

### BRIEF DESCRIPTION OF THE DRAWINGS

To illustrate the technical features of embodiments of the present invention more clearly, the accompanying drawings provided for describing the embodiments are introduced briefly in the following. The accompanying drawings in the following description are merely some embodiments of the present invention, but modifications on these embodiments are possible without departing from the scope of the present invention as defined in the claims.
- FIG. 1: is a block diagram illustrating an interference detector in accordance with an embodiment of the present invention,
- FIG. 2: is a block diagram illustrating an LAA transmission device in accordance with a further embodiment of the present invention,
- FIG. 3: is a block diagram illustrating a communication system comprising a plurality of LAA transmission devices in accordance with a further embodiment of the present invention,
- FIG. 4: is a block diagram illustrating a further communication system in accordance with a further embodiment of the present invention,
- FIG. 5: is a flow chart of a method for determining an interference type in accordance with an embodiment of the present invention,
- FIG. 6: is a diagram illustrating the power spectral density as a function of the frequency offset from the DC subcarrier frequency for a WiFi signal and an LTE signal in accordance with the present invention,
- FIG. 7: is a frequency-time diagram illustrating the transmission of two symbols in accordance with the present invention,
- FIG. 8: is a diagram illustrating the detection probability Pr[LAA detected|LAA transmitted] at a false detection Pr[LAA detected|WiFi transmitted] target of 1e-3 for different numbers of zero power resource elements, and
- FIG. 9: is a schematic illustration of the placement of zero-power resource elements as interference label in accordance with the present invention.

### Detailed Description of the Embodiments

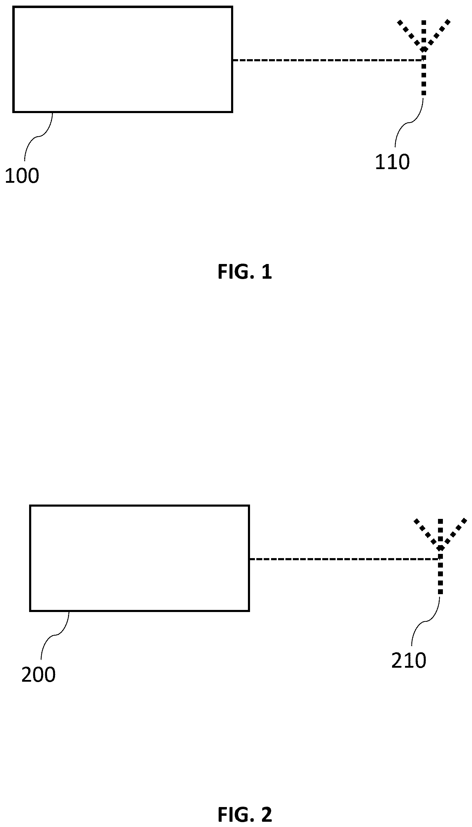

FIG. 1 is a block diagram illustrating an interference detector 100 in accordance with an embodiment of the present invention. The interference detector 100 is optionally (as indicated with a dashed line in FIG. 1) connected to a receive antenna 110. In other embodiments of the invention (not shown in FIG. 1), the interference detector 100 is not directly connected to an antenna, but receives the signal via a wired connection, e.g. from a central node in the communication system.

FIG. 2 is a block diagram illustrating an LAA transmission device 200 in accordance with a further embodiment of the present invention. The LAA transmission device 200 is optionally (as indicated with a dashed line in FIG. 2) connected to a transmission antenna 210. In other embodiments (not shown in FIG. 2), the LAA transmission device is not directly connected to a transmission antenna, but provides a transmission signal to a further node in the communication system. This further node can then cause a wireless transmission of the signal.

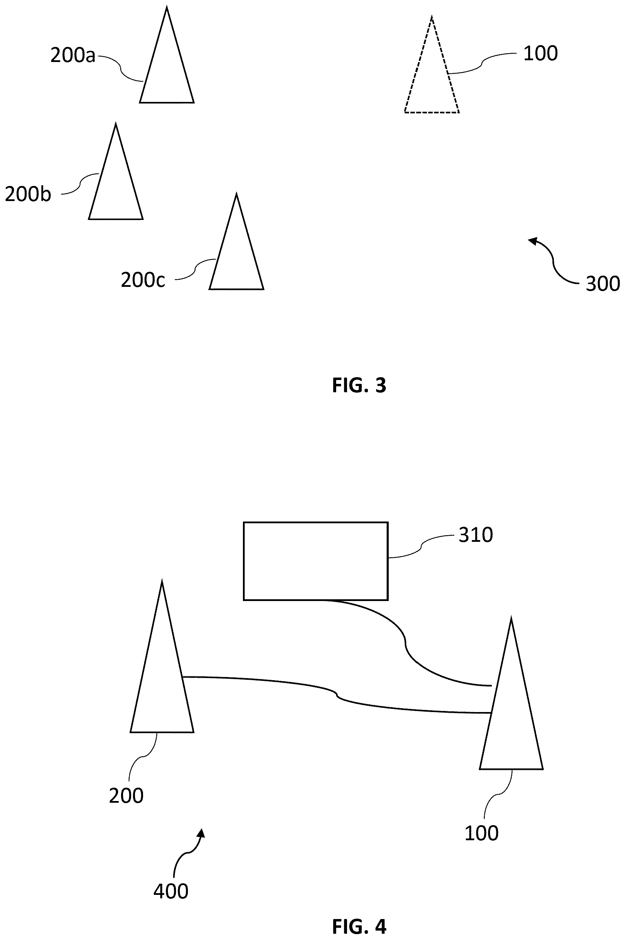

FIG. 3 is a block diagram illustrating a communication system 300 comprising a plurality of LAA transmission devices 200a, 200b, 200c in accordance with a further embodiment of the present invention. Optionally, the communication system 300 further comprises an interference detector 100. The LAA transmission device 200a, 200b, 200c of the communication system 300 can be configured to use at least one same resource element as interference label.

FIG. 4 is a block diagram illustrating a further communication system 400 in accordance with a further embodiment of the present invention. The further communication system 400 is a mixed communication system, i.e., it comprises a LAA transmission device 200, which can be configured to communicate according to the LTE standard. The mixed communication system 400 further comprises a WiFi transmission device 310, e.g. a WiFi access point 310. An interference detector 100 is positioned to receive signals from both the LAA transmission device 200 and the WiFi transmission device 310. The interference detector 100 is configured to distinguish the signals from the two devices by detecting an interference label (which is comprised only in the signal received from the LAA transmission device 200).

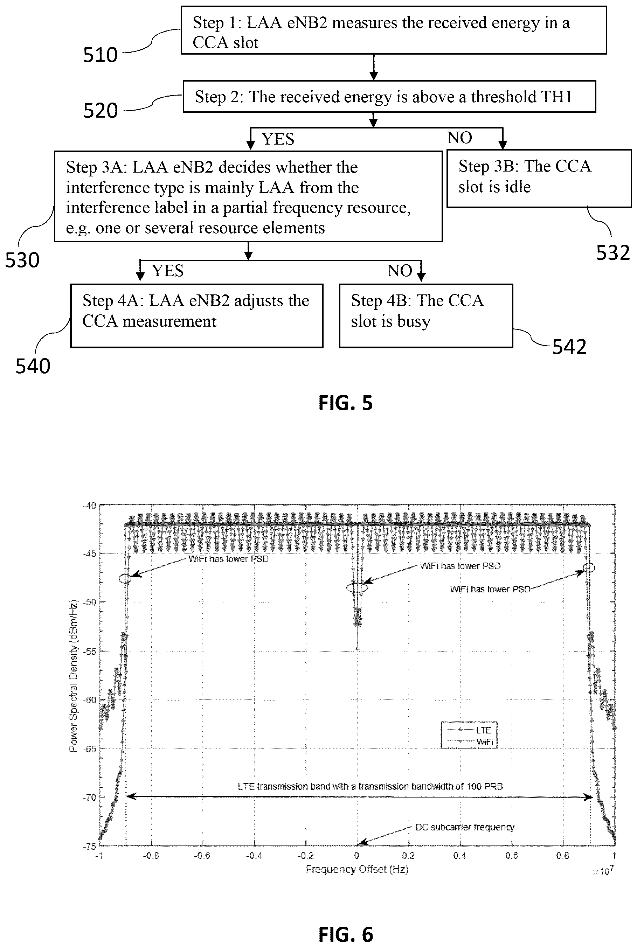

FIG. 5 is a flow chart of a method for determining an interference type in accordance with an embodiment of the present invention. According to this embodiment, an LAA eNB measures the received energy in one or more resource elements to identify whether the energy is mainly from LAA or not.

The LAA eNB performing clear channel assessment, CCA, firstly measures in a step 510 the received energy during a CCA slot. This could be a measurement of the received total energy or a measurement in a specific partial frequency resource.

Then, in step 520 the received energy is compared with a threshold TH1. If the received energy in the CCA slot is not above a threshold TH1, the LAA eNB regards the CCA slot as idle (step 532). If the received energy in the CCA slot is above the threshold TH1, the LAA eNB then proceeds with step 530.

In step 530, the interference detector decides whether the interference type is mainly LAA or not from the energy/power measured or the received signal in a partial frequency resource, e.g. one or several resource elements, where some transmitter source information is encoded, e.g. by empty power or a sequence. The partial frequency resource of this measurement can be the same partial frequency resource that is used for the energy measurement in step 510, or it can be a different partial frequency resource.

If the LAA eNB decides the interference is mainly from LAA, i.e. other LAA cells or eNBs, the LAA eNB may adjust the CCA measurement in step 540, by regarding the CCA slot as idle, or the channel is idle which means the LAA eNB may transmit immediately, or using a higher threshold TH2 for CCA measurement. Otherwise, in step 542 the CCA is regarded as busy.

To make better use of the frequency resource, the measured bandwidth should be less than the total system bandwidth, i.e. the number of resource elements for measurement would be less than the total number of resource elements in one OFDM symbol.

In one implementation, the LAA eNB measures the received energy or power in a frequency resource around DC subcarrier or at the edge of the system bandwidth to distinguish the interference type. One example is that said frequency resource is [*f*₀ - Δ*f*₁/2, *f*₀ + Δ*f*₁/2], where *f*₀ is the frequency of the DC subcarrier, or equivalently the carrier frequency, Δ*f*₁ is the subcarrier spacing of WiFi system, and Δ*f*₁ equals to 312.5 kHz for a WiFi system with system bandwidth of 20 MHz. While in LTE system, the subcarrier spacing Δ*f*₂ is 15 kHz. The DC subcarrier is un-modulated in LTE and WiFi. The LAA eNB may measure the received energy in the frequency resource [*f*₀ - Δ*f*₁ / 2, *f*₀ + Δ*f*₁ / 2], or in a subset of frequency resource [*f*₀ - Δ*f*₁ / 2, *f*₀ + Δ*f*₁ / 2]. The measuring duration could be one OFDM symbol, i.e. 1 / Δ*f*₂. Other measuring duration, e.g. one CCA slot, could also be assumed.

There is a big difference between WiFi subcarrier spacing Δ*f*₁ and LTE subcarrier spacing Δ*f*₂, which means that for WiFi un-modulated DC subcarrier frequency range, there are a number of modulated LTE subcarriers. The LAA eNB may therefore measure the energy or power within the WiFi DC subcarrier frequency range. If there is a sufficient level of power/energy, the LAA eNB may interpret that the interference is mainly LTE as WiFi is not expected to transmit power at this frequency range while LTE does. Otherwise the LAA eNB may interpret the interference is not LTE.

The PSDs are evaluated for a system bandwidth of 20 MHz with transmit power 30 dBm for signals generated without any proprietary spectrum filters or implementation margins. As can be seen in FIG. 6 the PSD of WiFi at the band edge of LTE transmission band is much lower than that of LTE. Similar observation holds for the frequency resource around the DC subcarrier. The parameters assumed for LTE and WiFi are given in Table 1 given below.

**Table 1. Numerology for 3GPP E-UTRA LTE and IEEE Std 802.11ac™-2013 for a 20 MHz channel.**

| **Parameter** | **3GPP E-UTRA LTE** | **IEEE Std 802.11ac™-2013** |
|---|---|---|
| Subcarrier spacing [kHz] | 15 | 312.5 |
| Symbol duration [µs] | ∼66.7 | 3.2 |
| Cyclic prefix [µs] | ∼4.7 | 0.8 |
| Modulated subcarriers | 1200 | 56 |
| DC subcarrier | Unmodulated | Unmodulated |

In one example, the LAA eNB measures the received power in the frequency range [*f*₀ *-* 97*.*5*KHz, f*₀ - 7.5*KHz*]U[*f*₀ + 7.5*KHz, f₀* + 97.5*KHz*], i.e. the frequency range of 12 LTE resource elements *k* = *TotalRENum*2-6,...,*TotalRENum*2-6 around DC subcarrier. A resource element is identified by the frequency index *ₖ* where *k* = 0,...*,TotalRENum*1 in the frequency for a 20MHz LTE system, *TotalRENum* is the number of total resource elements, i.e. 1200 for a 20MHz LTE system. *f*₀ is the carrier frequency, or the frequency of the DC subcarrier.

One example is that said frequency resource is at the edge of the transmission band, e.g. [*f*₀ *- X* / *2, f*₀ *- X* / 2 + Δ*f*]U[*f*₀ + *X* / *2* - Δ*f,* f₀ + *X* / 2] or a subset of [*f*₀ *- X* / 2, *f*₀ *- X* / 2 +Δ*f*]U[*f*₀ + *X* / 2 - Δ*f*, *f*₀ + *X* / 2], where Δ*f* is chosen so that *X* / 2 - Δ*f* > = Δ*f*₁ ^{∗}(*N*₁ +1) / 2, where *N*₁ is the number of used subcarriers in WiFi system, e.g. 56 in 802.11ac, X can be the system bandwidth of WiFi or LAA, or the transmission bandwidth of LAA, or the transmission bandwidth of LAA plus the LAA subcarrier spacing Δ*f*₂. In LTE 20MHz system, there are 1200 used subcarriers, and 1 un-modulated DC subcarrier, therefore the frequency range of the 1200 subcarriers is 18,015KHz, while in WiFi 20MHz system (802.11ac), there are 56 used subcarriers modulated and 1 un-modulated DC carrier, therefore the frequency range of the 56 subcarriers is 17,812.5KHz. It can be observed that the guard band (i.e. the band at the 20MHz edge and not used by modulated subcarriers) is wider for WiFi than LAA. Therefore LAA eNB may measure the received energy at those resource elements where the associated frequency is empty for WiFi as guard band, e.g. 12 resource elements *k*=0,...,5,1194,...,1199.

The advantages of measuring the received energy or power in a frequency resource to distinguish the interference type comprise at least: 1) no change of LTE transmission and therefore no overhead; 2) the capability of detection of the interference type all the time.

One should note that the identification of interference type at the LAA eNB for downlink transmission is only one example. The similar mechanism applies for uplink where the LAA UE similarly may distinguish the interference type by measuring the received energy in a subset of UL bandwidth.

### Zero power resource elements known by other LAA cells to facilitate the identification of the interference type for CCA

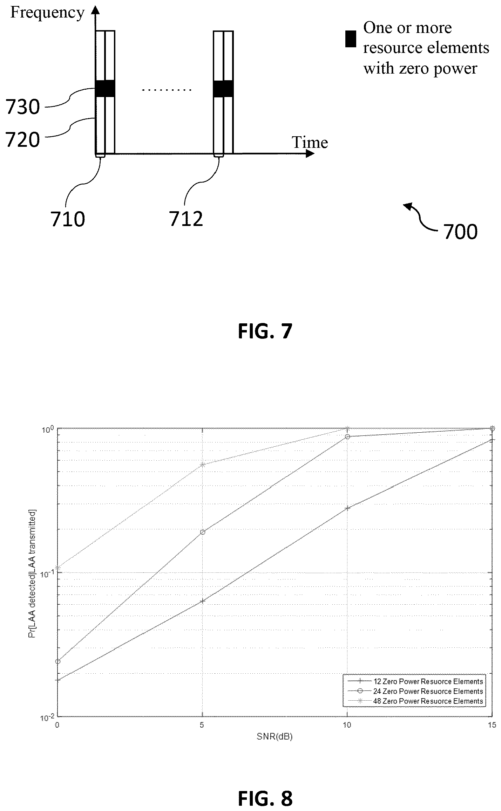

FIG. 7 illustrates an embodiment where LAA eNB1 encodes the interference label in some empty resource elements to facilitate the identification of the interference type. FIG. 7 shows a frequency-time diagram 700, wherein multiple symbols including two OFDM symbols 710, 712 are transmitted. The multiple symbols are transmitted using a total frequency resource 720. Within this total frequency resource 720 there is located a partial frequency resource 730. This partial frequency resource 730 consists of one or more resource elements with zero-power, thus encoding the interference label.

In one embodiment, LAA eNB1 transmits a downlink burst after LBT success, while LAA eNB2 when performing CCA, may measure the received energy in one or several resource elements. To facilitate the identification of the interference type at LAA eNB2, one implementation is that LAA eNB1 may transmit with zero-power in one or several resource elements also known by other cells/LAA eNBs (say LAA eNB2), as illustrated in FIG. 7. To completely mute the LAA transmission in certain frequency range and therefore help eNB2 distinguish the interference type, the frequency resource supposed to be in zero power may be common to multiple cells of the same operator or even all the cells belonging to one carrier frequency.

In one example, some other information associated with the transmit device could be encoded by interference labeling contained in the empty resource elements. One implementation is that operator ID is encoded by empty resource elements, e.g. different operator ID corresponds to different or different sets of empty resource elements. Other information, such as the system bandwidth and/or the transmit device capability, can also be encoded by empty resource elements.

LAA eNB2 may derive the information about the one or several resource elements with empty power in different ways, such as in a pre-defined manner, or derived from some information internal to eNB2, e.g. derived from the cell ID, or derived from the information exchange between eNB1 and eNB2, e.g. X2 signaling.

### Means to identify the interference type from the measurements in one or more resource elements

There are different implementations to distinguish the interference type from the received energy in the one or more resource elements at LAA eNB2.

One implementation is that eNB2 decides on the interference type by comparing the received energy or power in the frequency resource of the one or more resource elements and in a time duration with a threshold TH_LAA. Said time duration could be an OFDM symbol, or a CCA slot. If the received energy or power is below the threshold TH_LAA, eNB2 decides the interference is mainly from LAA, otherwise not. Said TH_LAA could be derived targeting a certain false-detection probability Pr[LAA detected|WiFi transmitted], say 0.1%. Here the false-detection probability Pr[LAA detected|WiFi transmitted] represents the probability that a WiFi transmit device transmits while an LAA eNB wrongly detects that there is an LAA transmission. The detection probability Pr[LAA detected|LAA transmitted] represents the probability that a LAA transmit device transmits while an LAA eNB correctly detects that there is an LAA transmission. Pr[LAA detected|LAA transmitted] is derived assuming a certain Pr[LAA detected|WiFi transmitted] target, say 0.1% or 1%.

Evaluations are established to show the detection performance of interference type by measuring the frequency resource around DC subcarrier. 1 transmit antenna and 2 receive antennas are assumed. The system bandwidth is 20 MHz for both LAA and WiFi. For WiFi, the FFT size is 64, 56 subcarriers are modulated with randomly generated QPSK symbols, and the cyclic prefix length is 16/(20e6) s. For LAA, normal cyclic prefix is used, and (1200-Num) subcarriers are modulated with randomly generated QPSK symbols, where Num=12, Num=24 or Num=48 represents the number of zero-power resource elements. The zero-power resource elements are located contiguously in the frequency domain with the frequency index k = 720, 721, ..., 720+Num-1. The channel model is ETU3. It can be observed from FIG. 8 that at the false detection target of 0.1%, a detection probability is 87.5% under SNR of 10 dB in case 24 zero-power resource elements are used. The detection probability under SNR of 10 dB is 100.0% in case 48 zero-power resource elements are used.

One implementation is that eNB2 decides on the interference type by comparing the received energy or power in the one or more resource elements of zero transmit power and also some other resource elements of non-zero power. For instance, if the received power in the resource elements of zero power by other eNBs is significantly lower than that in the resource elements of non-zero power by other eNBs, eNB2 decides the interference is mainly from LAA, otherwise not. Preferably the resource elements of zero power should be frequency adjacent or time adjacent with the resource elements of non-zero power to avoid the impact from time or frequency selectivity and better reflect the interference type. One example is that eNB2 measures the received power or energy in several zero power resource elements, while at the same time it measures the received power in some other non-zero power resource elements, where the zero power resource elements and the non-zero power resource elements are located in a same physical resource block. The non-zero power resource elements could be used for purpose of reference signals or control channels, such as cell-specific reference signals, PDCCH.

One example is an LAA transmitting eNB transmits with the Zero Power Resource Elements (ZPRE) and non-zero power resource elements in a number of consecutive resource elements, say in total N resource elements with frequency index from n to n+N-1, where even indexed resource elements are of zero power and odd indexed resource elements are of non-zero power. A narrow band interference is also allowed to transmit in the frequency resource which comprises the N resource elements. The LAA eNB is therefore able to determine that the interference type is LAA if the received power from the zero-power resource elements is significantly lower than that from the non-zero power resource elements. Otherwise, if zero power resource elements use different resource elements with index not n to n+N-1, it would be not possible for LAA measuring eNB to distinguish the transmission type.

One advantage is that the LAA eNB identifying the interference type by measuring the received energy from some frequency resource is able to identify the practical interference type, as the LAA eNB is using the same time resource for CCA measurement and interference type measurement. While for the solution of long term statistics to represent the current interference type may result in mismatch between the results based on long term statistics and the practical interference type for the current time instance. Similarly, it also addresses the mismatch of the interference type between the preamble phase and non-preamble phase in case WiFi or WiFi-like preamble detection used to identify the interference type.

One advantage is that the LAA eNB identifying the interference type by measuring the received energy from some frequency resource does not need to support a WiFi-like preamble transmission or WiFi/WiFi-like preamble detection. While for the solutions of LAA eNB identifying the interference type by detecting WiFi/WiFi-like preamble, there is additional complexity for support a WiFi-like preamble transmission and/or WiFi/WiFi-like preamble detection.

### Time frequency pattern of the resource elements for interference labeling

There are different implementations of the one or several resource elements for interference labeling.

One implementation is that the resource elements used for interference labeling are not located around DC subcarrier and/or not at the frequency range used for WiFi guard band. One example is that said resource elements are not within the frequency range [*f*₀ - Δ*f*₁ /2, *f*₀ + Δ*f*₁ / 2] or [*f*₀ *-X* / 2*, f₀-X* / 2 + Δ*_{f}*]U[*f*₀ + *X* / 2 *-* Δ*f, f*₀ + *X* / 2] or a subset of [*f*₀ *- X* / *2, f*₀ *- X* / 2 + *Δf* ]U[*f*₀ + *X* / 2 - Δ*f*, *f*₀ + *X* / 2], where *f*₀ is the frequency of the DC subcarrier, or equivalently the carrier frequency , Δ*f*₁ is the subcarrier spacing of WiFi system, and Δ*f*₁ equals 312.5 kHz for a WiFi system with system bandwidth of 20MHz, Δ*f* is chosen so that X / 2 - Δ*f* >= Δ*f*₁ ^{∗}(*N*₁ + 1) / 2, where *N*₁ is the number of used subcarriers in WiFi system, e.g. 56 in 802.11ac, and X can be the system bandwidth of WiFi or LAA, or the transmission bandwidth of LAA, or the transmission bandwidth of LAA plus the LAA subcarrier spacing Δ*f*₂. One example is that said resource elements are not resource elements *k* = 0,...,5,1194,...,1199, where the associated frequency is empty for WiFi as guard band.

One implementation is that the resource elements for interference labeling are placed in the entire transmission bandwidth, e.g. in every physical resource block. The resource elements could be located in the same or different resource elements in each physical resource block. One advantage is that a large number of resource elements can be used for interference type identification to improve the detection performance, while also helpful to identify some narrow band interference.

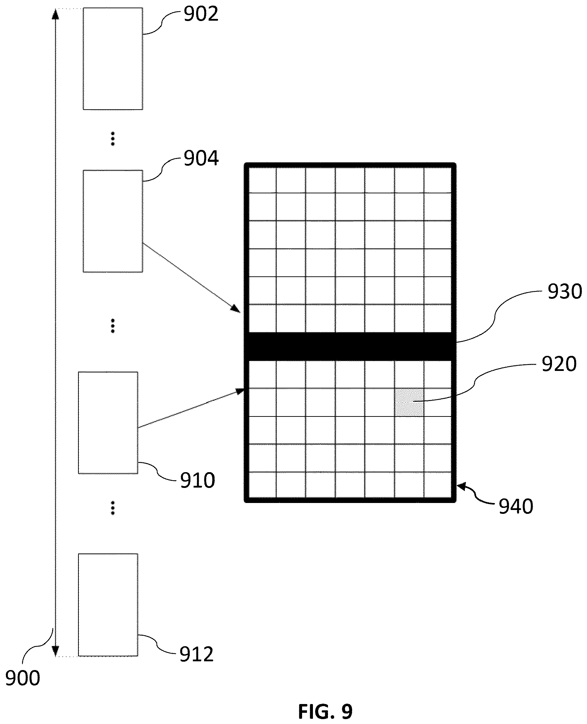

One example is shown in FIG. 9, where a total frequency resource 900 comprises a plurality of frequency resource blocks 902-912. A frequency resource block corresponds to a plurality of physical resource elements. One of these physical resource blocks is illustrated in more detail in FIG. 9, indicated with reference number 940. The physical resource block can comprise a plurality of resource elements 920, wherein in embodiments of the invention a subset 930 of all resource elements 920 are used for encoding the interference label. This subset 930 represents a partial frequency resource that is used for carrying the interference label. As a plurality of resource blocks 902-912 can comprise resource elements for carrying the interference label, the partial frequency resource can comprise a plurality of resource elements at different frequency locations.

There are a number of different implementations for placing the interference label in the physical resource blocks.

As indicated in FIG. 9, physical resource blocks 904, 910 can comprise zero-power resource elements 930 in the same location within the resource block.

One implementation is that the resource elements for interference labeling are in one or several, but not all physical resource blocks.

For example, 12 resource elements of one OFDM symbol of one physical resource block are used for interference labeling in a 20 MHz system with 1200 resource elements in total. One advantage is that there is a tradeoff between the overhead and the detection performance. To avoid blank transmission in the control channel region, which is used to transmit PDCCH and typically contains one to three OFDM symbols, the empty resource elements for interference labeling could exist only in the data symbol region, or non-control channel region.

One implementation is that only one resource element of one OFDM symbol is used for interference labeling. One advantage is that a minimum number of resource elements are used, further resulting in minimum overhead.

One implementation is the resource elements for interference labeling exist continuously in time domain, e.g. in every OFDM symbol, or more than one OFDM symbol, or at least in every OFDM symbol containing PDSCH since it could be difficult to support ZPRE in the control region containing PDCCH if the control region is supported in LAA, during every downlink burst. Compared to the prior art that a preamble is sent once before data transmission for interference source identification, one advantage is that the measuring eNB, LAA eNB2 is able to detect the instantaneous interference source whenever it performs CCA, which addresses the problem of the mismatch of the time the preamble is transmitted and the time CCA measurement is done. One other advantage is that there is higher detection probability to identify the interference type as the resource elements containing the labeling information are repeated in the time domain. In the prior art, if eNB2 fails to detect the preamble transmitted, eNB2 is not able to identify there is a transmission from eNB 1. While in this implementation, eNB2 is still able to identify the interference source in the following CCA slot as the resource elements for interference labeling are time continuously or repeated.

One implementation is that the resource elements for interference labeling are in at least two OFDM symbols during one transmission burst and the frequency location of the resource elements are different. One advantage is that the detection performance is more robust in a frequency selective channel.

### Resource elements carrying a sequence for interference labeling

This embodiment discloses that LAA eNB 1 encodes the interference label in a specific sequence of modulation symbols in some resource elements to facilitate the identification of the interference type, as in step 530 in FIG. 5.

In one embodiment, LAA eNB1 transmits a downlink burst after LBT success. LAA eNB1 also transmits a specific signal in one or more resource elements for interference labeling. One example is that this signal is a frequency domain sequence, such as CAZAC sequence, ZC sequence, PN sequence or gold sequence. While LAA eNB2 when performing CCA, may measure the received signal in said one or several resource elements to identify the interference type, i.e. by decoding the sequence sent by eNB1.

One advantage is that a coding can be introduced by the sequence therefore resulting in additional coding gain.

The LAA transmission device (200; 200a-200c) according to the embodiment of the invention, wherein the transmitter is configured to continuously transmit the interference label (730; 930).

The LAA transmission device (200; 200a-200c) according to the embodiments of the invention, wherein the subset comprises a first set of resource elements of a first OFDM symbol and a second set of resource elements of a second OFDM symbol, wherein the first and second set comprise elements with different frequency locations.

The LAA transmission device (200; 200a-200c) according to the embodiments of the invention, wherein the subset comprises a set of resource elements not around a DC subcarrier and/or not at an edge of a transmission band of the LAA transmission device.

Communication system (300; 400) comprising a plurality of LAA transmission devices (200; 200a-200c) according to the embodiments of the invention, wherein the LAA transmission devices use at least one same resource element as interference label (730; 930).

The communication system (300; 400) according to the embodiments of the invention, wherein the at least one same resource element is predetermined or indicated by a LAA node.

The foregoing descriptions are only implementation manners of the present invention, the protection of the scope of the present invention is not limited to this. Any variations or replacements can be easily made through person skilled in the art. Therefore, the protection scope of the present invention should be subject to the protection scope of the attached claims.

## Claims

1. Interference detector (100) for a wireless communication system (300; 400), configured to
- receive a signal of the wireless communication system (300; 400); and
- derive (530) an interference type from an interference label (730; 930) in a partial frequency resource of the received signal, wherein the partial frequency resource has a bandwidth smaller than a transmission bandwidth (900) of the wireless communication system; and
- wherein the interference label comprises a predetermined sequence of modulation symbols.

2. The interference detector (100) of claim 1, wherein the interference label (730; 930) comprises a zero-power resource element.

3. The interference detector (100) of one of the previous claims, wherein the partial frequency resource comprises one or more resource elements.

4. The interference detector (100) of one of the previous claims, wherein the interference detector is configured to measure (510) a total power of the received signal and derive (530) the interference type if the measured total power is above a predetermined threshold.

5. The interference detector (100) according to one of the previous claims, wherein the interference detector is configured to measure a partial power of the received signal in the partial frequency resource.

6. The interference detector (100) according to claim 5, wherein the interference detector is further configured to compare the partial power of the received signal in the partial frequency resource with a second threshold.

7. The interference detector (100) of one claims 5 or 6, wherein the interference detector is further configured to measure a different power of the received signal in a different frequency resource.

8. Licensed assisted access, LAA, transmission device (200; 200a-200c), configured to transmit a signal, wherein a partial frequency resource of the signal comprises an interference label (730; 930); wherein the partial frequency resource has a bandwidth smaller than a transmission bandwidth (900) of the wireless communication system; and wherein the interference label (730; 930) comprises a predetermined sequence of modulation symbols.

9. The LAA transmission device (200; 200a-200c) of claim 8, further configured to transmit at least one OFDM symbol using a plurality of resource elements, wherein a subset of the plurality of resource elements comprises the interference label (730; 930).

10. The LAA transmission device (200; 200a-200c) of claim 8 or 9, wherein the interference label (730; 930) comprises a zero-power resource element.

11. Method for determining an interference type in a wireless communication system (300; 400), comprising a step of deriving (530) an interference type from a partial frequency resource of a received signal, wherein the partial frequency resource has a bandwidth smaller than a transmission bandwidth (900) of the wireless communication system; and wherein the interference label comprises a predetermined sequence of modulation symbols.

12. Method for transmitting a signal in a wireless communication system (300; 400), wherein a partial frequency resource of the signal comprises an interference label (730; 930); wherein the partial frequency resource has a bandwidth smaller than a transmission bandwidth (900) of the wireless communication system; and wherein the interference label (730; 930) comprises a predetermined sequence of modulation symbols.

13. A computer-readable storage medium storing program code, the program code comprising instructions for carrying out either a method for determining an interference type in a wireless communication system (300; 400), comprising a step of deriving (530) an interference type from a partial frequency resource of a received signal, wherein the partial frequency resource has a bandwidth smaller than a transmission bandwidth (900) of the wireless communication system; and wherein the interference label comprises a predetermined sequence of modulation symbols or a method for transmitting a signal in a wireless communication system (300; 400), wherein a partial frequency resource of the signal comprises an interference label (730; 930); wherein the partial frequency resource has a bandwidth smaller than a transmission bandwidth (900) of the wireless communication system; and wherein the interference label (730; 930) comprises a predetermined sequence of modulation symbols.

## Patentansprüche

1. Interferenzdetektor (100) für ein drahtloses Kommunikationssystem (300; 400), der zu Folgendem konfiguriert ist
- Empfangen eines Signals des drahtlosen Kommunikationssystems (300; 400); und
- Ableiten (530) eines Interferenztyps aus einer Interferenzkennzeichnung (730; 930) in einer Teilfrequenzressource des empfangenen Signals, wobei die Teilfrequenzressource eine Bandbreite aufweist, die kleiner als eine Übertragungsbandbreite (900) des drahtlosen Kommunikationssystems ist; und
- wobei die Interferenzkennzeichnung eine vorbestimmte Abfolge von Modulationssymbolen umfasst.

2. Interferenzdetektor (100) nach Anspruch 1, wobei die Interferenzkennzeichnung (730; 930) ein Ressourcenelement ohne Energie (zero power) umfasst.

3. Interferenzdetektor (100) nach einem der vorhergehenden Ansprüche, wobei die Teilfrequenzressource ein oder mehrere Ressourcenelemente umfasst.

4. Interferenzdetektor (100) nach einem der vorhergehenden Ansprüche, wobei der Interferenzdetektor konfiguriert ist, eine Gesamtenergie des empfangenen Signals zu messen (510) und den Interferenztyp abzuleiten (530), wenn die gemessene Gesamtenergie über einem vorbestimmten Schwellenwert liegt.

5. Interferenzdetektor (100) nach einem der vorstehenden Ansprüche, wobei der Interferenzdetektor konfiguriert ist, eine Teilenergie des empfangenen Signals in der Teilfrequenzressource zu messen.

6. Interferenzdetektor (100) nach Anspruch 5, wobei der Interferenzdetektor ferner konfiguriert ist, die Teilenergie des empfangenen Signals in der Teilfrequenzressource mit einem zweiten Schwellenwert zu vergleichen.

7. Interferenzdetektor (100) nach einem der Ansprüche 5 oder 6, wobei der Interferenzdetektor ferner konfiguriert ist, eine unterschiedliche Energie des empfangenen Signals in einer unterschiedlichen Frequenzressource zu messen.

8. LAA-Übertragungsvorrichtung (200; 200a-200c) (Licensed assisted access - LAA, mit lizenzgestütztem Zugang), die konfiguriert ist, ein Signal zu übertragen, wobei eine Teilfrequenzressource des Signals eine Interferenzkennzeichnung (730; 930) umfasst; wobei die Teilfrequenzressource eine Bandbreite aufweist, die kleiner als eine Übertragungsbandbreite (900) des drahtlosen Kommunikationssystems ist; und wobei die Interferenzkennzeichnung (730; 930) eine vorbestimmte Abfolge von Modulationssymbolen umfasst.

9. LAA-Übertragungsvorrichtung (200; 200a-200c) nach Anspruch 8, die ferner dazu konfiguriert ist, mindestens ein OFDM-Symbol unter Verwendung mehrerer Ressourcenelemente zu übertragen, wobei eine Untergruppe der mehreren Ressourcenelemente die Interferenzkennzeichnung (730; 930) umfasst.

10. LAA-Übertragungsvorrichtung (200; 200a-200c) nach Anspruch 8 oder 9, wobei die Interferenzkennzeichnung (730; 930) ein Ressourcenelement ohne Energie umfasst.

11. Verfahren zum Bestimmen eines Interferenztyps in einem drahtlosen Kommunikationssystem (300; 400), umfassend einen Schritt des Ableitens (530) eines Interferenztyps aus einer Teilfrequenzressource eines empfangenen Signals, wobei die Teilfrequenzressource eine Bandbreite aufweist, die kleiner als eine Übertragungsbandbreite (900) des drahtlosen Kommunikationssystems ist; und wobei die Interferenzkennzeichnung eine vorbestimmte Abfolge von Modulationssymbolen umfasst.

12. Verfahren zum Übertragen eines Signals in einem drahtlosen Kommunikationssystem (300; 400), wobei eine Teilfrequenzressource des Signals eine Interferenzkennzeichnung (730; 930) umfasst; wobei die Teilfrequenzressource eine Bandbreite aufweist, die kleiner als eine Übertragungsbandbreite (900) des drahtlosen Kommunikationssystems ist; und wobei die Interferenzkennzeichnung (730; 930) eine vorbestimmte Abfolge von Modulationssymbolen umfasst.

13. Computerlesbares Speichermedium, das Programmcode speichert, wobei der Programmcode Anweisungen zum Ausführen entweder eines Verfahrens zum Bestimmen eines Interferenztyps in einem drahtlosen Kommunikationssystem (300; 400), umfassend einen Schritt des Ableitens (530) eines Interferenztyps aus einer Teilfrequenzressource eines empfangenen Signals, wobei die Teilfrequenzressource eine Bandbreite aufweist, die kleiner als eine Übertragungsbandbreite (900) des drahtlosen Kommunikationssystems ist; und wobei die Interferenzkennzeichnung eine vorbestimmte Abfolge von Modulationssymbolen umfasst, oder eines Verfahrens zum Übertragen eines Signals in einem drahtlosem Kommunikationssystem (300; 400) umfasst, wobei eine Teilfrequenzressource des Signals eine Interferenzkennzeichnung (730; 930) umfasst; wobei die Teilfrequenzressource eine Bandbreite aufweist, die kleiner als eine Übertragungsbandbreite (900) des drahtlosen Kommunikationssystems ist; und wobei die Interferenzkennzeichnung (730; 930) eine vorbestimmte Abfolge von Modulationssymbolen umfasst.

## Revendications

1. Détecteur d'interférences (100) pour un système de communications sans fil (300 ; 400), configuré pour
- recevoir un signal du système de communications sans fil (300 ; 400) ; et
- déduire (530) un type d'interférence d'une étiquette d'interférence (730 ; 930) dans une ressource de fréquence partielle du signal reçu, dans lequel la ressource de fréquence partielle a une bande passante inférieure à une largeur de bande de transmission (900) du système de communications sans fil ; et
- dans lequel l'étiquette d'interférence comprend une séquence prédéterminée de symboles de modulation.

2. Détecteur d'interférences (100) selon la revendication 1, dans lequel l'étiquette d'interférence (730 ; 930) comprend un élément de ressource à puissance nulle.

3. Détecteur d'interférences (100) selon l'une des revendications précédentes, dans lequel la ressource de fréquence partielle comprend un ou plusieurs éléments de ressources.

4. Détecteur d'interférences (100) selon l'une des revendications précédentes, dans lequel le détecteur d'interférences est configuré pour mesurer (510) une puissance totale du signal reçu et déduire (530) le type d'interférence si la puissance totale mesurée est supérieure à un seuil prédéterminé.

5. Détecteur d'interférences (100) selon l'une des revendications précédentes, dans lequel le détecteur d'interférences est configuré pour mesurer une puissance partielle du signal reçu dans la ressource de fréquence partielle.

6. Détecteur d'interférences (100) selon la revendication 5, dans lequel le détecteur d'interférences est en outre configuré pour comparer la puissance partielle du signal reçu dans la ressource de fréquence partielle à un second seuil.

7. Détecteur d'interférences (100) selon une des revendications 5 ou 6, dans lequel le détecteur d'interférences est en outre configuré pour mesurer une puissance différente du signal reçu dans une ressource de fréquence différente.

8. Dispositif de transmission (200 ; 200a à 200c), à accès assisté sous licence, LAA (Licensed assisted access), configuré pour transmettre un signal, dans lequel une ressource de fréquence partielle du signal comprend une étiquette d'interférence (730 ; 930) ; dans lequel la ressource de fréquence partielle a une bande passante inférieure à une largeur de bande de transmission (900) du système de communications sans fil ; et dans lequel l'étiquette d'interférence (730 ; 930) comprend une séquence prédéterminée de symboles de modulation.

9. Dispositif de transmission LAA (200 ; 200a à 200c) selon la revendication 8, configuré en outre pour transmettre au moins un symbole OFDM en utilisant une pluralité d'éléments de ressources, dans lequel un sous-ensemble de la pluralité d'éléments de ressources comprend l'étiquette d'interférence (730 ; 930).

10. Dispositif de transmission LAA (200 ; 200a à 200c) selon la revendication 8 ou 9, dans lequel l'étiquette d'interférence (730 ; 930) comprend un élément de ressource à puissance nulle.

11. Procédé de détermination d'un type d'interférence dans un système de communications sans fil (300 ; 400), comprenant une étape consistant à déduire (530) un type d'interférence d'une ressource de fréquence partielle d'un signal reçu, dans lequel la ressource de fréquence partielle a une bande passante inférieure à une largeur de bande de transmission (900) du système de communications sans fil ; et dans lequel l'étiquette d'interférence comprend une séquence prédéterminée de symboles de modulation.

12. Procédé de transmission d'un signal dans un système de communications sans fil (300 ; 400), dans lequel une ressource de fréquence partielle du signal comprend une étiquette d'interférence (730 ; 930) ; dans lequel la ressource de fréquence partielle a une bande passante inférieure à une largeur de bande de transmission (900) du système de communications sans fil ; et dans lequel l'étiquette d'interférence (730 ; 930) comprend une séquence prédéterminée de symboles de modulation.

13. Support de mémoire lisible par ordinateur stockant du code de programme, le code de programme comprenant des instructions pour mettre en oeuvre soit un procédé de détermination d'un type d'interférence dans un système de communications sans fil (300 ; 400), comprenant une étape consistant à déduire (530) un type d'interférence d'une ressource de fréquence partielle d'un signal reçu, dans lequel la ressource de fréquence partielle a une bande passante inférieure à une largeur de bande de transmission (900) du système de communications sans fil ; et dans lequel l'étiquette d'interférence comprend une séquence prédéterminée de symboles de modulation, soit un procédé de transmission d'un signal dans un système de communications sans fil (300 ; 400), dans lequel une ressource de fréquence partielle du signal comprend une étiquette d'interférence (730 ; 930) ; dans lequel la ressource de fréquence partielle a une bande passante inférieure à une largeur de bande de transmission (900) du système de communications sans fil ; et dans lequel l'étiquette d'interférence (730 ; 930) comprend une séquence prédéterminée de symboles de modulation.
